# EUROPEAN PATENT APPLICATION

(11) **EP 4 651 619 A1**
(43) Date of publication of application: **19.11.2025**
(21) Application number: 23915383.6
(22) Date of filing: 13.01.2023
(51) Int. Cl.: H04W 76/27, H04W 88/04

(54) **RADIO RESOURCE CONTROL (RRC) CONNECTION PROCESSING METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Hersina, Günter
(86) International application number: PCT/CN2023/072169
(87) International publication number: WO 2024/148614

(57) **Abstract**

The present disclosure provides a radio resource control (RRC) connection processing method and apparatus, and relates to the technical field of communication. The embodiments of the present disclosure provide a radio resource control (RRC) connection processing method, wherein in response to receiving a switching instruction sent by a second terminal device, a first terminal device can determine whether to reestablish an RRC connection, wherein the second terminal device is a relay terminal device performing sidelink communication with the first terminal device. The present disclosure can avoid a remote UE experiencing interruption and signaling consumption resulting from an RRC connection reestablishment during relay-UE radio link failure, switching and cell reselection.

## Description

### TECHNICAL FIELD

The disclosure relates to the field of communication technologies, and in particular to methods and devices for processing a radio resource control (RRC) connection.

### BACKGROUND

In order to support direct communication between user equipment (UE) and a terminal, SideLink (SL) transmission communication mode is introduced. Three transmission modes are supported on the SideLink, namely unicast, multicast and broadcast. A UE may communicate with a base station via another UE as a relay instead of directly connecting to the base station. The UE that is not connected to the base station is called "remote UE", and the UE that provides the relay function is called "relay UE". The remote UE and the relay UE communicate through SideLink unicast. When the relay UE undergoes a radio link failure, a handover, or a cell reselection, the remote UE needs to trigger a radio resource control (RRC) connection reestablishment, and the RRC connection reestablishment will cause interruption and signaling consumption of the remote UE.

### SUMMARY

The disclosure provides methods and devices for processing a radio resource control (RRC) connection, which may avoid interruption and signaling consumption of a remote user equipment (UE) caused by an RRC connection reestablishment when the relay UE undergoes a radio link failure, a handover, or a cell reselection.

In a first aspect, embodiments of the disclosure provide a method for processing an RRC connection, performed by a first terminal. The method includes: in response to receiving a handover indication sent by a second terminal, determining whether to perform an RRC connection reestablishment, in which the second terminal is a relay terminal for performing sidelink communication with the first terminal.

In some embodiments of the disclosure, determining whether to perform the RRC connection reestablishment includes: determining whether to perform the RRC connection reestablishment based on whether the first terminal is configured with a multipath connection, in which the multipath connection includes a direct path where the first terminal is directly connected to a base station and an indirect path where the first terminal is connected to the base station via the second terminal; and in response to determining that the first terminal is configured with the multipath connection, not performing the RRC connection reestablishment.

In some embodiments of the disclosure, determining whether to perform the RRC connection reestablishment based on whether the first terminal is configured with the multipath connection further includes: in response to determining that the first terminal is not configured with the multipath connection, performing the RRC connection reestablishment.

In some embodiments of the disclosure, in response to determining that the first terminal is configured with the multipath connection, not performing the RRC connection reestablishment includes at least one of: in response to determining that the first terminal is configured with the multipath connection and in response to determining that a direct path in the multipath connection is available, not performing the RRC connection reestablishment; or in response to determining that the first terminal is configured with the multipath connection and in response to determining that a direct path in the multipath connection supports a transmission of a Signaling Radio Bearer (SRB), not performing the RRC connection reestablishment.

In some embodiments of the disclosure, determining that the direct path in the multipath connection is available includes at least one of: determining that no failure occurs on the direct path in the multipath connection; or determining that a transmission on the direct path in the multipath connection is not suspended.

In some embodiments of the disclosure, determining that the direct path in the multipath connection supports the transmission of the SRB includes at least one of: a Radio Link Control (RLC) of the SRB being located on the direct path in the multipath connection; or the SRB being configured as split SRB or duplicated SRB.

In some embodiments of the disclosure, the method further includes: sending the handover indication the base station on the direct path.

In some embodiments of the disclosure, the method further includes: sending handover information for the second terminal to the base station, in which the handover information includes a target cell to which the second terminal is handed over.

In some embodiments of the disclosure, after not performing the RRC connection reestablishment in response to determining that the first terminal is configured with the multipath connection, the method further includes: directly releasing a sidelink connection with the second terminal.

In some embodiments of the disclosure, after not performing the RRC connection reestablishment in response to determining that the first terminal is configured with the multipath connection, the method further includes: determining whether the target cell to which the second terminal is handed over belongs to a specific target cell; in response to the target cell belonging to the specific target cell, maintaining the sidelink connection with the second terminal; and in response to the target cell not belonging to the specific target cell, releasing the sidelink connection with the second terminal.

In some embodiments of the disclosure, determining whether the target cell to which the second terminal is handed over belongs to the specific target cell includes: matching a cell identifier of the target cell with cell identifiers in a specific target list to determine whether the target cell belongs to the specific target cell.

In some embodiments of the disclosure, the method further includes: receiving the specific target list sent by the base station, in which the specific target list carries the cell identifiers of specific target cells.

In some embodiments of the disclosure, after not performing the RRC connection reestablishment in response to determining that the first terminal is configured with the multipath connection, the method further includes: receiving indication information sent by a base station, in which the indication information is used for indicating whether to release the sidelink connection with the second terminal; and determine whether to release the sidelink connection with the second terminal based on the indication information.

In a second aspect, embodiments of the disclosure provide a method for processing a radio resource control (RRC) connection, performed by a base station. The method includes: receiving a handover indication for a second terminal, in which the handover indication is sent by a first terminal on a direct path.

In some embodiments of the disclosure, the method further includes: receiving handover information for the second terminal sent by the first terminal, in which the handover information includes a target cell to which the second terminal is handed over.

In some embodiments of the disclosure, the method further includes: sending a specific target list to the first terminal, in which the specific target list carries cell identifiers of specific target cells.

In some embodiments of the disclosure, the method further includes: sending indication information to the first terminal, in which the indication information is used for indicating whether to release a sidelink connection with the second terminal.

In a third aspect, embodiments of the disclosure provide a device for processing a radio resource control (RRC) connection, applied to a first terminal. The device includes: a processing module, configured to determine whether to perform an RRC connection reestablishment in response to receiving a handover indication sent by a second terminal, in which the second terminal is a relay terminal for performing sidelink communication with the first terminal.

In a fourth aspect, embodiments of the disclosure provide a device for processing a radio resource control (RRC) connection, applied to a base station. The device includes a receiving module configured to receive a handover indication for a second terminal sent, by a first terminal via a direct path.

In a fifth aspect, embodiments of the disclosure provide a communication device, including: a transceiver, a memory, and a processor. The processor is connected to the transceiver and the memory respectively, is configured to control radio signal reception and transmission of the transceiver by executing computer executable instructions on the memory, and is configured to implement the method according to the embodiments in the first aspect or the embodiments in the second aspect of the disclosure.

In a sixth aspect, embodiments of the disclosure provide a computer storage medium, in which the computer storage medium stores computer executable instructions, after the computer executable instructions are executed by a processor, the method according to the embodiments in the first aspect or the embodiments in the second aspect of the disclosure is implemented.

In a seventh aspect, embodiments of the disclosure provide a communication system including a first terminal, a second terminal, and a base station. The first terminal is configured to perform the method according to the embodiments in the first aspect of the disclosure, and the base station is configured to perform the method according to the embodiments in the second aspect of the disclosure.

With the methods and the devices for processing an RRC connection according to the embodiments of the disclosure, the first terminal may determine whether to perform the RRC connection reestablishment upon receiving the handover indication sent by the second terminal. With the embodiments of the disclosure, the RRC connection may be managed based on a determination result of whether there is the multipath connection. When it is determined that the multipath connection is configured, the direct path connected to the base station may be used to communicate with the base station, and thus there is no need to perform the RRC connection reestablishment, which may effectively avoid the interruption and signaling consumption of a remote UE caused by the RRC connection reestablishment.

Additional aspects and advantages of the disclosure will be given in part in the following description and in part will be obvious from the following description or learned through practice of the disclosure.

### BRIEF DESCRIPTION OF THE DRAWINGS

The above and/or additional aspects and advantages of the disclosure will become apparent and easily understood from the following description of the embodiments in conjunction with the accompanying drawings, in which:
FIG. 1 is a schematic flow chart illustrating a method for processing a radio resource control (RRC) connection according to an embodiment of the disclosure;
FIG. 2 is a schematic flow chart illustrating a method for processing an RRC connection according to an embodiment of the disclosure;
FIG. 3 is a schematic flow chart illustrating a method for processing an RRC connection according to an embodiment of the disclosure;
FIG. 4 is a schematic flow chart illustrating a method for processing an RRC connection according to an embodiment of the disclosure;
FIG. 5 is a schematic flow chart illustrating a method for processing an RRC connection according to an embodiment of the disclosure;
FIG. 6 is a schematic flow chart illustrating a method for processing an RRC connection according to an embodiment of the disclosure;
FIG. 7 is a schematic flow chart illustrating a method for processing an RRC connection according to an embodiment of the disclosure;
FIG. 8 is a schematic flow chart illustrating a method for processing an RRC connection according to an embodiment of the disclosure;
FIG. 9 is a schematic flow chart illustrating a method for processing an RRC connection according to an embodiment of the disclosure;
FIG. 10 is a timing diagram of a method for processing an RRC connection according to an embodiment of the disclosure;
FIG. 11 is a block diagram illustrating a device for processing an RRC connection according to an embodiment of the disclosure;
FIG. 12 is a block diagram illustrating a device for processing an RRC connection according to an embodiment of the disclosure;
FIG. 13 is a schematic diagram illustrating the structure of a communication device according to an embodiment of the disclosure; and
FIG. 14 is a schematic diagram illustrating the structure of a chip according to an embodiment of the disclosure.

### DETAILED DESCRIPTION

Embodiments of the disclosure will be described in detail below, and examples of the embodiments are shown in the accompanying drawings, in which the same or similar reference numerals throughout represent the same or similar elements or elements having the same or similar functions. The embodiments described below with reference to the accompanying drawings are exemplary and are intended to be used to explain the disclosure and should not be construed as limiting the disclosure.

In order to support direct communication between user equipment (UE) and a terminal, SideLink (SL) transmission communication mode is introduced. Three transmission modes are supported on the SideLink, namely unicast, multicast and broadcast. A UE may communicate with a base station via another UE as a relay instead of directly connecting to the base station. The UE that is not connected to the base station is called "remote UE", and the UE that provides the relay function is called "relay UE". The remote UE and the relay UE communicate with each other through SideLink unicast. When the relay UE undergoes a radio link failure, a switching, or a cell reselection, the remote UE needs to trigger a radio resource control (RRC) connection reestablishment, and the RRC connection reestablishment will cause interruption and signaling consumption of the remote UE.

In view of this, the disclosure proposes methods and devices for processing a an RRC connection, which may avoid the interruption and signaling consumption of the remote UE caused by the RRC connection reestablishment when the relay UE undergoes a radio link failure, a switching, or a cell reselection.

The methods and the devices for processing a RRC connection according to the disclosure are described in detail below in conjunction with the accompanying drawings.

Example embodiments will be described in detail herein, examples of which are shown in the accompanying drawings. When the following description refers to the drawings, the same numbers in different drawings represent the same or similar elements unless otherwise indicated. The embodiments described in the following example embodiments do not represent all embodiments consistent with the disclosure. Instead, they are merely examples of devices and methods consistent with some aspects of the disclosure as detailed in the appended claims.

The terms used in the embodiments of the disclosure are only for the purpose of describing specific embodiments and are not intended to limit the embodiments of the disclosure. The singular forms of "a" and "the" used in the embodiments of the disclosure and the appended claims are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the disclosure, the information should not be limited to these terms. These terms are only used to distinguish the same type of information from each other. For example, without departing from the scope of the embodiments of the disclosure, the "first information" may also be referred to as the "second information", and similarly, the "second information" may also be referred to as the "first information". Depending on the context, the word "if" as used herein may be interpreted as "at the time of," "when" or "in response to determining".

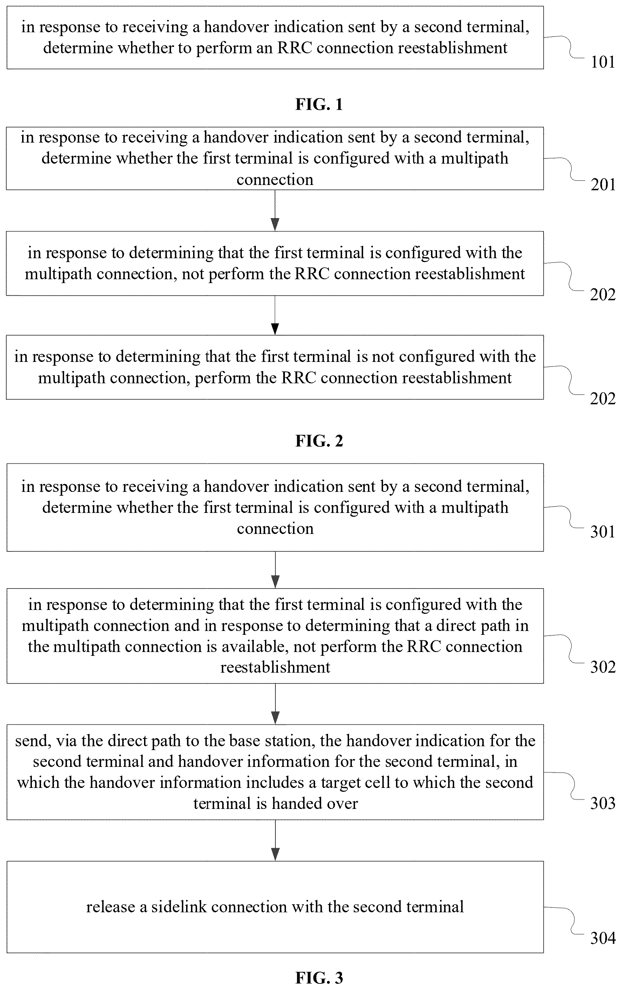

FIG. 1 illustrates a method for processing an RRC connection according to an embodiment of the disclosure. As illustrated in FIG. 1, the method is performed by a first terminal. The first terminal may be UE that is not directly connected to a base station but communicates with the base station via another relay terminal. That is, the first terminal is a remote UE. The method may include the following.

At step 101, in response to receiving a handover indication sent by a second terminal, it is determined whether to perform an RRC connection reestablishment.

The second terminal is a relay terminal for performing sidelink communication with the first terminal. The handover indication is used for indicating that the second terminal has undergone a handover of a serving cell.

For the embodiments of the disclosure, in a specific application scenario, the first terminal and the second terminal may communicate through Sidelink unicast. When the second terminal undergoes a radio link failure, a switching or a cell reselection to cause an RRC connection failure, a notification message (such as Notification Message Sidelink) may be sent to the connected first terminal via the Sidelink. The notification message may carry the handover indication for indicating that the second terminal has undergone the handover of the serving cell. Correspondingly, the first terminal may determine that the serving cell of the second terminal has been handed over in response to the received handover indication, and the first terminal may further determine whether to perform an RRC connection reestablishment. As a possible implementation, when the first terminal determines that the handover for the second terminal does not affect the communication connection between the first terminal and the base station, the RRC connection reestablishment may not be performed. As a possible implementation, when the first terminal determines that the handover for the second terminal affects the communication connection between the first terminal and the base station (for example the handover for the second terminal causes that the first terminal and the base station are unable to continue the communication connection normally), the RRC connection reestablishment is required to perform.

In conclusion, according to the method for processing an RRC connection according to the disclosure, the first terminal may determine whether to perform the RRC connection reestablishment when receiving the handover indication sent by the second terminal. With the embodiments of the disclosure, after receiving the handover indication sent by the second terminal, the first terminal performs a judgment process on the RRC connection reestablishment, and when the handover for the second terminal does not affect the communication connection between the first terminal and the base station, the RRC connection reestablishment is not performed, which may effectively avoid the interruption and signaling consumption of the first terminal caused by the RRC connection reestablishment.

FIG. 2 illustrates a method for processing an RRC connection according to an embodiment of the disclosure. The method is performed by a first terminal. Based on the embodiments illustrated in FIG. 1, as illustrated in FIG. 2, the method may include the following.

At step 201, in response to receiving a handover indication sent by a second terminal, it is determined whether a first terminal is configured with a multipath connection.

The multipath connection includes a direct path where the first terminal is directly connected to the base station and an indirect path where the first terminal is connected to the base station via the second terminal. The direct path is a link in which the first terminal directly establishes a communication connection with the base station without passing through the second terminal. The indirect path is a link in which the first terminal needs to pass through the second terminal as a relay to establish a communication connection with the base station.

In a specific application scenario, the first terminal may determine that the second terminal has undergone a handover of a serving cell in response to the received handover indication. At this time, the first terminal may further determine whether the first terminal is configured with the multipath connection with the base station and determine whether to perform the RRC connection reestablishment based on whether the first terminal is configured with the multipath connection. When the multipath connection is configured, even if the second terminal that acts as a relay in the indirect path has undergone the handover, the first terminal may still maintain the RRC connection with the base station on the direct path, and thus there is no need to perform the RRC connection reestablishment. Conversely, when the multipath connection is not configured, that is, only an indirect path is configured between the first terminal and the base station, the RRC connection reestablishment is required to perform.

At step 202, in response to determining that the first terminal is configured with the multipath connection, no RRC connection reestablishment is performed.

With the technical solution according to the disclosure, when the first terminal is configured with the multipath connection with the base station, a bearer of the first terminal may be transmitted only via the direct path (i.e., Direct Bearer), a bearer of the first terminal may be transmitted only via the indirect path (called Indirect Bearer), or a bearer of the first terminal may be transmitted via both the direct path and the indirect path (called Multipath Bearer). The first terminal may maintain a connection with the network via the direct path and the indirect path at the same time, which may improve transmission rate and transmission reliability. When the first terminal is configured with the multipath connection and the first terminal has established a direct path connection and an indirect path connection with the serving cell and the serving relay, even if the relay UE (i.e., the second terminal) undergoes a handover, the first terminal may still maintain the RRC connection with the network via the direct path. Therefore, there is no need to perform the RRC connection reestablishment, which may avoid communication interruption and signaling consumption of the first terminal caused by the RRC connection reestablishment performed by the first terminal when the second terminal has undergone the handover.

At step 203, in response to determining that the first terminal is not configured with the multipath connection, the RRC connection reestablishment is performed.

In conclusion, with the method for processing an RRC connection according to the disclosure, the first terminal may determine whether the multipath connection is configured when receiving the handover indication sent by the second terminal and determine not to perform the RRC connection reestablishment in response to determining that the multipath connection is configured. The first terminal may determine whether the multipath connection is configured when receiving the handover indication sent by the second terminal and determine that there is a need to perform the RRC connection reestablishment in response to determining that the multipath connection is not configured. With the embodiments of the disclosure, the management of the RRC connection may be performed based on a result of determining whether the multipath connection is configured. When it is determined that the multipath connection is configured, the direct path connected to the base station may be further used to communicate with the base station, and there is no need to perform the RRC connection reestablishment, which may effectively avoid the interruption and signaling consumption of the remote UE caused by the RRC connection reestablishment

FIG. 3 illustrates a method for processing an RRC connection according to an embodiment of the disclosure. The method is performed by a first terminal. Based on the embodiments illustrated in FIGS. 1 and 2, as illustrated in FIG. 3, the method may include the following.

At step 301, in response to receiving a handover indication sent by a second terminal, it is determined whether a first terminal is configured with a multipath connection.

For this embodiment of the disclosure, for the specific implementation process reference may be made to the relevant description in step 201 of the embodiments, which will not be repeated here.

At step 302, in response to determining that the first terminal is configured with the multipath connection and in response to determining that a direct path in the multipath connection is available, no RRC connection reestablishment is performed.

For the embodiments of the disclosure, after determining that the multipath connection is configured, in order to ensure that the direct path may be used for normal communication with the base station, the first terminal may further determine whether the direct path in the multipath connection is available. When it is determined that the direct path in the multipath connection is available for communication with the base station, it is determined not to perform the RRC connection reestablishment. Conversely, when it is determined that the direct path in the multipath connection is not available, the RRC connection reestablishment is required to perform.

Determining that the direct path in the multipath connection is available may include at least one of: determining that no failure occurs on the direct path in the multipath connection, in which the failure includes a radio link failure; or determining that a transmission of the direct path in the multipath connection is not suspended.

Accordingly, in determining whether the direct path in the multipath connection is available, as a possible implementation, it may be determined whether a data transmission of the direct path in the multipath connection is normal. When there is a transmission abnormality such as a failure or multiple cumulative transmission failures, it may be determined that the direct link is not available for the communication with the base station, and the RRC connection reestablishment is required to perform. When it is determined that no failure occurs on the direct path in the multipath connection, it may be determined that the direct link is available for the communication with the base station, and there is no need to perform the RRC connection reestablishment.

As a possible implementation, it may be determined whether the transmission of the direct path in the multipath connection is suspended. When it is determined that the transmission is suspended, it may be determined that the direct link is not available for the communication with the base station, and the RRC connection reestablishment is required to perform. When it is determined that the transmission of the direct path in the multipath connection is not suspended, it may be determined that the direct link is available for the communication with the base station, and there is no need to perform the RRC connection reestablishment.

As a possible implementation, it may be determined whether the data transmission of the direct path in the multipath connection is normal and whether the transmission of the direct path in the multipath connection is suspended. When it is determined that a failure occurs on the direct path and/or the transmission of the direct path is suspended, it may be determined that the direct link is not available for the communication with the base station and the RRC connection reestablishment is required to perform. When it is determined that no failure occurs on the direct path and the transmission of the direct path is not suspended, it may be determined that the direct link is available for the communication with the base station and the RRC connection reestablishment is not required to perform.

At step 303, the handover indication for the second terminal and handover information for the second terminal are sent to the base station on the direct path. The handover information includes a target cell to which the second terminal is handed over.

The target cell may be acquired by the first terminal based on a discovery signal from the second terminal. In a specific application scenario, the first terminal and the second terminal may discover each other through a discovery process. After the discovery process is started, the first terminal may send or receive the discovery signal. The discovery signal carries information of a terminal, such as a serving cell identifier and a UE identifier of the terminal. After receiving the handover indication from the second terminal and determining that the second terminal has undergone the handover of the serving cell, the first terminal may receive the discovery signal from the second terminal through the discovery process and determine a serving cell (i.e., the target cell) to which the second terminal is handed over based on the serving cell identifier in the discovery signal.

The serving cells of the direct path and the indirect path in the multipath connection may only belong to the same base station. For the embodiments of the disclosure, when it is determined that the first terminal is configured with the multipath connection and the direct path in the multipath connection is available, the first terminal may send, to the base station on the direct path, the handover indication for the second terminal as well as the handover information including the target cell to which the second terminal is handed over, such that the base station may subsequently send a candidate cell list to the first terminal, in which cells in the candidate cell list belong to the same base station as the serving cell of the direct path. The first terminal may verify, based on the candidate cell list, whether the target cell and the serving cell of the direct path belong to the same base station, and determine whether to release the connection with the second terminal based on a verification result. Or the base station may determine whether to release the connection with the second terminal based on the handover indication for the second terminal sent by the first terminal and the target cell to which the second terminal is handed over and send, to the first terminal, indication information used for indicating whether to release the sidelink connection with the second terminal. It should be noted that when the first terminal sends the handover indication for the second terminal and the handover information to the base station, as a possible implementation, the first terminal may send the handover indication for the second terminal and the handover information to the base station respectively, and an order of sending the handover indication and the handover information is not specifically limited here. As a possible implementation, the first terminal may send the handover indication for the second terminal and handover information to the base station at the same time, for example the handover indication may carry the handover information, and there is no specific limitation on this.

At step 304, a sidelink connection with the second terminal is released.

For the embodiments of the disclosure, as a possible implementation, in response to the first terminal being configured with the multipath connection, after the first terminal determines not to perform the RRC connection reestablishment, the first terminal may directly release the sidelink connection with the second terminal.

For the embodiments of the disclosure, as a possible implementation, after determining not to perform the RRC connection establishment, the first terminal may determine whether the target cell to which the second terminal is handed over belongs to a specific target cell. In response to the target cell belonging to the specific target cell, the first terminal maintains the sidelink connection with the second terminal. In response to the target cell not belonging to the specific target cell, the first terminal releases the sidelink connection with the second terminal. In detail, a specific target list (i.e., the candidate cell list) sent by a base station may be received, and the specific target list carries a cell identifier of the specific target cell. In determining whether the target cell to which the second terminal is handed over belongs to the specific target cell, the cell identifier of the target cell may be matched with cell identifiers in the specific target list to determine whether the target cell belongs to the specific target cell. The specific target cell is a candidate cell that belongs to the same base station as the serving cell of the direct path.

For the embodiments of the disclosure, as a possible implementation, after determining not to perform the RRC connection reestablishment, the first terminal may receive indication information sent by the base station, and the indication information is used for indicating whether to release the sidelink connection with the second terminal. The first terminal further responds to the indication information sent by the base station to determine whether to release the sidelink connection with the second terminal. If the indication information sent by the base station indicates to release the sidelink connection with the second terminal, the first terminal performs a corresponding release process. If the indication information sent by the base station indicates to maintain the sidelink connection with the second terminal, the first terminal does not perform the corresponding release process and maintains the sidelink connection with the second terminal.

In conclusion, with the method for processing an RRC connection according to the disclosure, when receiving the handover indication sent by the second terminal, the first terminal may manage the RRC connection based on a determination result of whether there is the multipath connection and whether the direct path is available. When it is determined that the multipath connection is configured and the direct path in the multipath connection is available, the direct path connected to the base station may be further used to communicate with the base station. Therefore, there is no need to perform the RRC connection reestablishment, which may effectively avoid the interruption and signaling consumption of the remote UE caused by the RRC connection reestablishment.

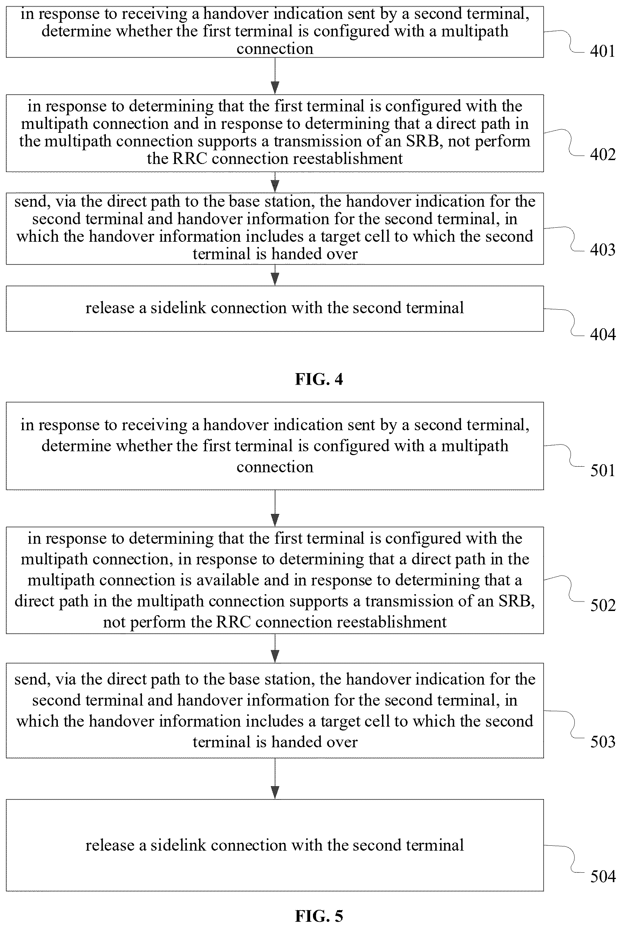

FIG. 4 illustrates a method for processing an RRC connection according to an embodiment of the disclosure. The method is performed by a first terminal. Based on the embodiments illustrated in FIGS. 1, 2 and 3, as illustrated in FIG. 4, the method may include the following.

At step 401, in response to receiving a handover indication sent by a second terminal, it is determined whether the first terminal is configured with a multipath connection.

For this embodiment of the disclosure, for the specific implementation process reference may be made to the relevant description in step 201 of the embodiments, which will not be repeated here.

At step 402, in response to determining that the first terminal is configured with the multipath connection and in response to determining that a direct path in the multipath connection supports a transmission of a signaling radio bearer (SRB), no RRC connection reestablishment is performed.

In a specific application scenario, the base station may configure a radio link control (RLC) of the SRB on a direct path or an indirect path and performs a transmission via the direct path or the indirect path. Or the SRB may be connected to two RLCs and the two RLCs are located on the direct path and the indirect path. In this case, the SRB may be transmitted simultaneously via the direct path and the indirect path, including split SRB or duplicated SRB. In the split SRB and duplicated SRB, the SRB may be connected to two RLCs, which are located on the direct link and the indirect link respectively.

For the embodiments of the disclosure, after determining that the multipath connection is configured, in order to ensure that the direct path may be used for normal communication with the base station, the first terminal may further determine whether the direct path in the multipath connection supports the transmission of the SRB. The first terminal may not perform the RRC connection reestablishment when determining that the direct path in the multipath connection supports the transmission of the SRB. Conversely, when it is determined that the direct path in the multipath connection does not support the transmission of the SRB, the RRC connection reestablishment is required to perform.

Determining that the direct path in the multipath connection supports the transmission of the SRB includes at least one of: the RLC of the SRB being located on the direct path in the multipath connection; or the SRB being configured as a split SRB or a duplicated SRB.

Accordingly, in determining whether the direct path in the multipath connection supports the transmission of the SRB, as a possible implementation, it may be determined whether the RLC of the SRB is located on the direct path in the multipath connection. When it is determined that the RLC of the SRB is not located on the direct path in the multipath connection, it may be determined that the direct path does not support the transmission of the SRB, and the RRC connection reestablishment is required to perform. When it is determined that the RLC of the SRB is located on the direct path in the multipath connection, it may be determined that the direct path supports the transmission of the SRB, and the RRC connection reestablishment is not required to perform.

As a possible implementation, it may be determined whether the SRB is configured as a split SRB or a duplicated SRB. When it is determined that the SRB is not configured as a split SRB or a duplicated SRB, it may be determined that the direct path does not support the transmission of the SRB, and the RRC connection reestablishment is required to perform. When it is determined that the SRB is configured as a split SRB or a duplicated SRB, it may be determined that the direct path supports the transmission of the SRB, the RRC connection reestablishment is not required to perform.

As a possible implementation, it is possible to determine whether the RLC of the SRB is located on the direct path in the multipath connection and whether the SRB is configured as a split SRB or a duplicated SRB. When it is determined that the RLC of the SRB is not located on the direct path in the multipath connection and when it is determined that the SRB is not configured as a split SRB or a duplicated SRB, it may be determined that the direct path does not support the transmission of the SRB, and the RRC connection reestablishment is required to perform. When it is determined that the RLC of the SRB is located on the direct path in the multipath connection and/or when it is determined that the SRB is configured as a split SRB or a duplicated SRB, it may be determined that the direct path supports the transmission of the SRB, and the RRC connection reestablishment is not required to perform.

At step 403, the handover indication for the second terminal and handover information for the second terminal are sent to the base station via the direct path, in which the handover information includes a target cell to which the second terminal is handed over.

For this embodiment of the disclosure, for the specific implementation process reference may be made to the relevant description in step 303 of the embodiments, which will not be repeated here.

At step 404, a sidelink connection with the second terminal is released.

For this embodiment of the disclosure, for the specific implementation process reference may be made to the relevant description in step 304 of the embodiments, which will not be repeated here.

In conclusion, with the method for processing an RRC connection according to the disclosure, when receiving the handover indication sent by the second terminal, the first terminal may manage the RRC connection based on a result of determining whether there is the multipath connection and whether the direct path in the multipath connection supports the transmission of the SRB. When it is determined that the multipath connection is configured and the direct path in the multipath connection supports the transmission of the SRB, the direct path connected to the base station may be further used to communicate with the base station. Therefore, there is no need to perform the RRC connection reestablishment, which may effectively avoid the interruption and signaling consumption of the remote UE caused by the RRC connection reestablishment.

FIG. 5 illustrates a method for processing an RRC connection according to an embodiment of the disclosure. The method is performed by a first terminal. Based on the embodiments illustrated in FIGS. 1, 2, 3, and 4, as illustrated in FIG. 5, the method may include the following.

At step 501, in response to receiving a handover indication sent by a second terminal, it is determined whether a first terminal is configured with a multipath connection.

For this embodiment of the disclosure, for the specific implementation process reference may be made to the relevant description in step 201 of the embodiments, which will not be repeated here.

At step 502, in response to determining that the first terminal is configured with the multipath connection, determining that a direct path in the multipath connection is available, and determining that the direct path in the multipath connection supports a transmission of an SRB, no RRC connection reestablishment is performed.

For the embodiments of the disclosure, after determining that the multipath connection is configured, to ensure that the direct path may be used for normal communication with the base station, the first terminal may further determine whether the direct path in the multipath connection is available and whether the direct path in the multipath connection supports the transmission of the SRB. When it is determined that the direct path in the multipath connection is available for communication with the base station and that the direct path in the multipath connection supports the transmission of the SRB, it is determined not to perform the RRC connection reestablishment. Conversely, when it is determined that the direct path in the multipath connection is not available and/or it is determined that the direct path in the multipath connection does not support the transmission of the SRB, the RRC connection reestablishment is required to perform.

Determining that the direct path in the multipath connection is available includes at least one of: determining that no failure occurs on the direct path in the multipath connection, in which the failure includes a radio link failure; or determining that a transmission of the direct path in the multipath connection is not suspended. For the specific implementation process reference may be made to the relevant description in step 302 of the embodiments, which will not be repeated here.

Determining that the direct path in the multipath connection supports the transmission of the SRB includes at least one of: the RLC of the SRB being located in the direct path in the multipath connection; or the SRB being configured as a split SRB or a duplicated SRB. For the specific implementation process reference may be made to the relevant description in step 402 of the embodiments, which will not be repeated here.

At step 503, the handover indication for the second terminal and handover information for the second terminal are sent to the base station via the direct path, in which the handover information includes a target cell to which the second terminal is handed over.

For this embodiment of the disclosure, for the specific implementation process reference may be made to the relevant description in step 303 of the embodiments, which will not be repeated here.

At step 504, a sidelink connection with the second terminal is released.

For this embodiment of the disclosure, for the specific implementation process reference may be made to the relevant description in step 304 of the embodiments, which will not be repeated here.

In conclusion, with the method for processing an RRC connection according to the disclosure, when receiving the handover indication sent by the second terminal, the first terminal may manage the RRC connection based on the results of determining whether there is the multipath connection, whether the direct path is available, and whether the direct path in the multipath connection supports the transmission of the SRB. When it is determined that the multipath connection is configured, the direct path is available and the direct path supports the transmission of the SRB, the direct path connected to the base station may be further used to communicate with the base station. Therefore, there is no need to perform the RRC connection reestablishment, which may effectively avoid the interruption and signaling consumption of the remote UE caused by the RRC connection reestablishment.

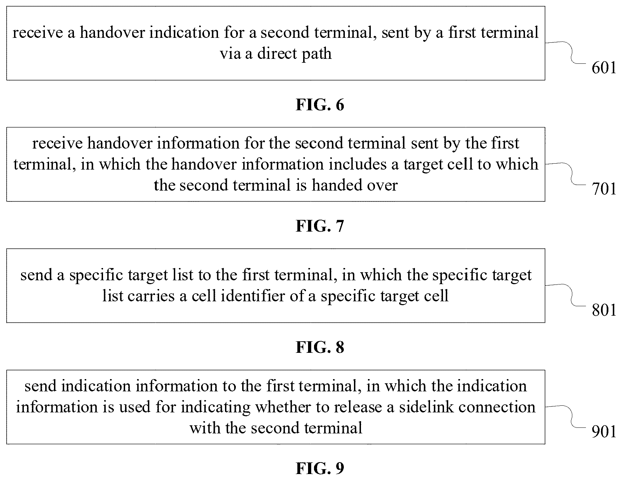

FIG. 6 illustrates a method for processing an RRC connection according to an embodiment of the disclosure. As illustrated in FIG. 6, the method is performed by a base station and may include the following.

At step 601, a handover indication for a second terminal sent, by a first terminal via a direct path, is received.

The second terminal is a relay terminal for performing side link communication with the first terminal, and the second terminal is used to provide a relay function for the first terminal to realize communication between the first terminal and the base station.

In a specific application scenario, the first terminal and the second terminal may perform the communication via sidelink unicast. When the second terminal undergoes a radio link failure, a handover, or a cell reselection to cause a failure in the RRC connection, a notification message (such as Notification Message Sidelink) may be sent to the connected first terminal via the sidelink, and the notification message carries the handover indication used for indicating that the second terminal has undergone a handover of a serving cell. After receiving the handover indication from the second terminal and determining that the second terminal has undergone the handover of the service cell, the first terminal may send the handover indication for the second terminal to the base station.

For the embodiments of the disclosure, the base station may obtain, based on the received handover indication, information that the second terminal has undergone the handover of the serving cell and may further send a candidate cell list to the first terminal, such that the first terminal may verify, based on the candidate cell list, whether the target cell to which the second terminal is handed over and the serving cell of the direct path belong to the same base station, and the first terminal may determine, based on a verification result, whether to release the connection with the second terminal. Or the base station may determine, based on the handover indication for the second terminal sent by the first terminal, whether to release the connection with the second terminal and may send, to the first terminal, indication information used for indicating whether to release the sidelink connection with the second terminal.

In conclusion, with the method for processing an RRC connection according to the disclosure, the base station may provide corresponding information to the first terminal based on the handover indication for the second terminal sent via the direct path by the first terminal, to facilitate the first terminal to manage the RRC connection. When it is determined that the multipath connection is configured, the direct path connected to the base station may be further used to communicate with the base station. Therefore, there is no need to perform the RRC connection reestablishment, which may effectively avoid the interruption and signaling consumption of the remote UE caused by the RRC connection reestablishment.

FIG. 7 illustrates a method for processing an RRC connection according to an embodiment of the disclosure. The method is performed by a base station. Based on the embodiments illustrated in FIG. 6, as illustrated in FIG. 7, the method may include the following.

At step 701, handover information for a second terminal sent by a first terminal is received, in which the handover information includes a target cell to which the second terminal is handed over.

The target cell may be acquired by the first terminal based on a discovery signal from the second terminal. In a specific application scenario, the first terminal and the second terminal may discover each other through a discovery process. After the discovery process is started, the first terminal may send or receive the discovery signal. The discovery signal carries information of the terminal, such as a serving cell identifier or a UE identifier. After receiving the handover indication for the second terminal and determining that the second terminal has undergone the handover of the serving cell, the first terminal may receive the discovery signal from the second terminal through the discovery process and determine a serving cell (i.e., the target cell) to which the second terminal is handed over based on the serving cell identifier in the discovery signal.

For the embodiments of the disclosure, the base station may obtain, based on the received handover indication and the target cell, information that the second terminal has undergone the handover of the serving cell and the base station may further send the candidate cell list to the first terminal, such that the first terminal may verify, based on the candidate cell list, whether the target cell to which the second terminal is handed over and the serving cell of the direct path belong to the same base station and determine whether to release the connection with the second terminal based on a verification result. Or the base station may determine whether to release the connection with the second terminal based on the target cell to which the second terminal is handed over sent by the first terminal, and may send, to the first terminal, indication information used for indicating whether to release the sidelink connection with the second terminal.

It should be noted that, for steps 601 and 701 of the embodiments, as a possible implementation, the handover indication and the handover information received by the base station may be sent separately by the first terminal, and an order of sending the handover indication and the handover information is not specifically limited here. As a possible implementation, the handover indication and the handover information received by the base station may be sent simultaneously by the first terminal, for example the handover indication may carry the handover information, and no specific limitation is made to this.

In conclusion, with the method for processing an RRC connection according to the disclosure, the base station may provide corresponding information to the first terminal based on the target cell to which the second terminal is handed over sent by the first terminal, to facilitate the first terminal to manage the RRC connection. When it is determined that the multipath connection is configured, the direct path connected to the base station may be further utilized to communicate with the base station, and there is no need to perform the RRC connection reestablishment, which may effectively avoid the interruption and signaling consumption of the remote UE caused by the RRC connection reestablishment.

FIG. 8 illustrates a method for processing an RRC connection according to an embodiment of the disclosure. The method is performed by a base station. Based on the embodiments illustrated in FIGS. 6, 7, and 8, as illustrated in FIG. 8, the method may include the following.

At step 801, a specific target list is sent to a first terminal, in which the specific target list carries a cell identifier of a specific target cell.

The specific target cell is a candidate cell that belongs to the same base station as the serving cell of the direct path.

For the embodiments of the disclosure, by sending the specific target list (i.e., the candidate cell list) to the first terminal, in which the cells in the candidate cell list and the serving cell of the direct path belong to the same base station, the first terminal may verify, based on the candidate cell list, whether the target cell and the serving cell of the direct path belong to the same base station and may determine whether to release the connection with the second terminal based on a verification result. In detail, the cell identifier of the target cell may be matched with the cell identifiers in the specific target list to determine whether the target cell belongs to the specific target cell.

In conclusion, with the method for processing an RRC connection according to the disclosure, the base station may send the specific target list to the first terminal, such that the first terminal may manage the RRC connection based on the specific target list. When it is determined that the multipath connection is configured, the direct path connected to the base station is further utilized to communicate with the base station. Therefore, there is no need to perform the RRC connection reestablishment, which may effectively avoid the interruption and signaling consumption of the remote UE caused by the RRC connection reestablishment.

FIG. 9 illustrates a method for processing an RRC connection according to an embodiment of the disclosure. The method is performed by a second terminal. Based on the embodiments illustrated in FIGS. 6, 7, and 8, as illustrated in FIG. 9, the method may include the following.

At step 801, indication information is sent to a first terminal, in which the indication information is used for indicating whether to release a sidelink connection with a second terminal.

For the embodiments of the disclosure, the base station may determine, based on the handover indication for the second terminal sent by the first terminal and/or the target cell to which the second terminal is handed over, whether to release the connection with the second terminal and send, to the first terminal, indication information used for indicating whether to release the sidelink connection with the second terminal. The purpose of sending by the base station the indication information to the first terminal is to enable the first terminal to determine whether to release the sidelink connection with the second terminal in response to the indication information sent by the base station. If the indication information sent by the base station indicates to release the sidelink connection with the second terminal, the first terminal performs the corresponding release process. If the indication information sent by the base station indicates to maintain the sidelink connection with the second terminal, the first terminal does not perform the corresponding release process and maintains the sidelink connection with the second terminal.

In conclusion, with the method for processing an RRC connection according to the disclosure, the base station may send, to the first terminal, the indication information used for indicating whether to release the sidelink connection with the second terminal, such that the first terminal may manage the RRC connection based on the indication information. When it is determined that the multipath connection is configured, the direct path connected to the base station may be further utilized to communicate with the base station. Therefore, there is no need to perform the RRC connection reestablishment, which may effectively avoid the interruption and signaling consumption of the remote UE caused by the RRC connection reestablishment.

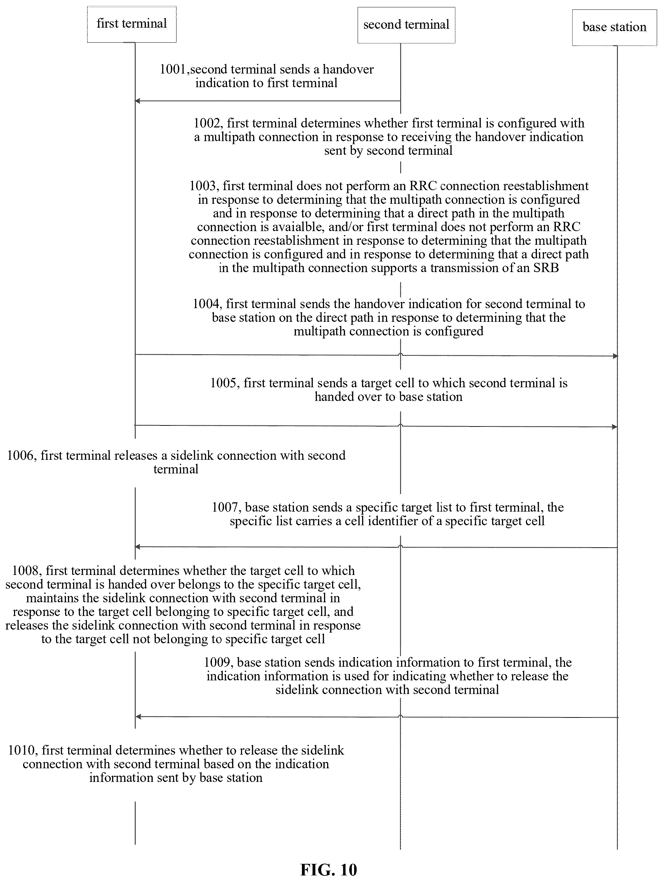

FIG. 10 is a timing diagram of a method for processing an RRC connection according to an embodiment of the disclosure. The method is performed by a communication system. The communication system includes: a first terminal, a second terminal, and a base station. The first terminal may be a UE that is not directly connected to the base station but communicates with the base station via another terminal acting as a relay. That is, the first terminal is a remote UE. The second terminal is a relay terminal for performing sidelink communication with the first terminal, and the second terminal is used to provide a relay function for the first terminal to realize communication between the first terminal and the base station. In a specific implementation, the second terminal may send a handover indication to the first terminal. The first terminal determines, in response to receiving the handover indication sent by the second terminal, whether a multipath connection is configured. The first terminal determines not to perform an RRC connection reestablishment in response to determining that the multipath connection is configured and that a direct path in the multipath connection is available, and/or the first terminal determines not to perform the RRC connection reestablishment in response to determining that the multipath connection is configured and that a direct path in the multipath connection supports a transmission of an SRB. The first terminal sends the handover indication for the second terminal to the base station on the direct path. The first terminal sends, to the base station, a target cell to which the second terminal is handed over. The first terminal releases the sidelink connection with the second terminal. The base station sends a specific target list to the first terminal, in which the specific target list carries a cell identifier of a specific target cell. The first terminal determines whether the target cell to which the second terminal is handed over belongs to the specific target cell. In response to the target cell belonging to the specific target cell, the sidelink connection with the second terminal is maintained, and in response to the target cell not belonging to the specific target cell, the sidelink connection with the second terminal is released. The base station sends indication information to the first terminal, in which the indication information is used for indicating whether to release the sidelink connection with the second terminal. The first terminal determines whether to release the sidelink connection with the second terminal in response to the indication information sent by the base station.

At step 1001, the second terminal sends a handover indication to the first terminal.

The second terminal is a relay terminal for performing sidelink communication with the first terminal.

In a specific application scenario, the first terminal and the second terminal may perform communication through sidelink unicast. When the second terminal undergoes a radio link failure, a handover, or a cell reselection to cause a failure in the RRC connection, a notification message (such as Notification Message Sidelink) may be sent to the connected first terminal via the sidelink, and the notification message may carry the handover indication for indicating that the second terminal has undergone a handover of a serving cell.

At step 1002, in response to receiving the handover indication sent by a second terminal, the first terminal determines whether the first terminal is configured with a multipath connection.

The multipath connection includes a direct path in which the first terminal is directly connected to the base station and an indirect path in which the first terminal is connected to the base station via the second terminal. The direct path is a link in which the first terminal directly establishes a communication connection with the base station without passing through the second terminal. The indirect path is a link in which the first terminal needs to pass through the second terminal as a relay to establish a communication connection with the base station.

For the embodiments of the disclosure, the first terminal may determine, in response to the received handover indication, that the second terminal has undergone the handover of the serving cell. At this time, the first terminal may further determine whether a multipath connection with the base station is configured. When the multipath connection is configured, even if the second terminal that acts as a relay in the indirect path has undergone the handover, the first terminal may still maintain an RRC connection with the base station via the direct path, and then there is no need to perform the RRC connection reestablishment. Conversely, when the multipath connection is not configured, that is, only an indirect path is configured between the first terminal and the base station, the RRC connection reestablishment is required to perform.

At step 1003, in response to determining that the multipath connection is configured and in response to determining that a direct path in the multipath connection is available, the first terminal does not perform the RRC connection reestablishment and/or in response to determining that the multipath connection is configured and in response to determining that a direct path in the multipath connection supports a transmission of an SRB, the first terminal does not perform the RRC connection reestablishment.

As a possible implementation, the first terminal may determine not to perform the RRC connection reestablishment in response to determining that the multipath connection is configured and in response to determining that the direct path in the multipath connection is available. The specific implementation process may be found in the relevant description in step 302 of the embodiments, which will not be repeated here.

As a possible implementation, the first terminal may determine not to perform the RRC connection reestablishment in response to determining that the multipath connection is configured and in response to determining that the direct path in the multipath connection supports the transmission of the SRB. The specific implementation process may be found in the relevant description in step 402 of the embodiments, which will not be repeated here.

As a possible implementation, the first terminal may determine not to perform the RRC connection reestablishment in response to determining that the multipath connection is configured, in response to determining that the direct path in the multipath connection is available, and in response to determining that the direct path in the multipath connection supports the transmission of the SRB. The specific implementation process may be found in the relevant description in step 502 of the embodiments, which will not be repeated here.

At step 1004, in response to determining that the multipath connection is configured, the first terminal sends the handover indication for the second terminal to the base station via the direct path.

At step 1005, the first terminal sends, to the base station, a target cell to which the second terminal is handed over.

The target cell may be acquired by the first terminal based on the discovery signal from the second terminal. In a specific application scenario, the first terminal and the second terminal may discover each other through a discovery process. After the discovery process is started, the first terminal may send or receive the discovery signal. The discovery signal carries information of a terminal such as a serving cell identifier and a UE identifier. After receiving the handover indication for the second terminal and determining that the second terminal has undergone the handover of the serving cell, the first terminal may receive the discovery signal from the second terminal through the discovery process, and determines, based on the serving cell identifier in the discovery signal, the serving cell (i.e., the target cell) to which the second terminal is handed over.

The serving cells of the direct path and the indirect path in the multipath connection may only belong to the same base station. For the embodiments of the disclosure, when it is determined that the first terminal is configured with the multipath connection and the direct path in the multipath connection is available, the first terminal may send, to the base station via the direct path, the handover indication for the second terminal, as well as handover information including the target cell to which the second terminal is handed over, such that the base station may subsequently send a candidate cell list to the first terminal to enable the first terminal to verify, based on the candidate cell list, whether the target cell and the serving cell of the direct path belong to the same base station, and to determined whether to release the connection with the second terminal based on a verification result. Or the base station may determine, based on the handover indication for the second terminal sent by the first terminal and the target cell to which the second terminal is handed over, whether to release the connection with the second terminal and send, to the first terminal, indication information for indicating whether to release the sidelink connection with the second terminal.

It should be noted that in sending by the first terminal the handover indication for the second terminal and the handover information to the base station, as a possible implementation, the first terminal may send the handover indication for the second terminal and the handover information to the base station separately, and an order of sending the handover indication and the handover information is not specifically limited here. As a possible implementation, the first terminal may send the handover indication for the second terminal and the handover information to the base station at the same time, for example the handover indication may carry the handover information, and there is no specific limitation on this.

At step 1006, the first terminal releases the sidelink connection with the second terminal.

For the embodiments of the disclosure, as a possible implementation, in response to the first terminal being configured with the multipath connection, the first terminal may directly release the sidelink connection with the second terminal after determining not to perform the RRC connection reestablishment.

At step 1007, the base station sends a specific target list to the first terminal, in which the specific target list carries a cell identifier of a specific target cell.

The specific target cell is a candidate cell that belongs to the same base station as the serving cell of the direct path.

For the embodiments of the disclosure, the base station sends the specific target list (i.e., the candidate cell list) to the first terminal, to enable the first terminal to verify, based on the candidate cell list, whether the target cell and the serving cell of the direct path belong to the same base station, and determine whether to release the connection with the second terminal based on a verification result.

At step 1008, the first terminal determines whether the target cell to which the second terminal is handed over belongs to a specific target cell. In response to the target cell belonging to the specific target cell, the first terminal maintains a sidelink connection with the second terminal. In response to the target cell not belonging to the specific target cell, the first terminal releases the sidelink connection with the second terminal.

For the embodiments of the disclosure, as a possible implementation, after the first terminal receives the specific target list (i.e., the candidate cell list) sent by the base station, in determining whether the target cell to which the second terminal is handed over belongs to the specific target cell, the cell identifier of the target cell may be matched with the cell identifiers in the specific target list to determine whether the target cell belongs to the specific target cell. The specific target cell is a candidate cell that belongs to the same base station as the serving cell of the direct path.

At step 1009, the base station sends indication information to the first terminal, in which the indication information is used for indicating whether to release the sidelink connection with the second terminal.

For the embodiments of the disclosure, the base station may determine, based on the handover indication for the second terminal sent by the first terminal and/or the target cell to which the second terminal is handed over, whether to release the connection with the second terminal and send, to the first terminal, the indication information for indicating whether to release the sidelink connection with the second terminal.

At step 1010, the first terminal determines whether to release the sidelink connection with the second terminal in response to the indication information sent by the base station.

For the embodiments of the disclosure, as a possible implementation, after the first terminal receives the indication information sent by the base station, the first terminal may further respond to the indication information to determine whether to release the sidelink connection with the second terminal. If the indication information sent by the base station indicates to release the sidelink connection with the second terminal, the first terminal performs the corresponding release process. If the indication information sent by the base station indicates to maintain the sidelink connection with the second terminal, the first terminal does not perform the corresponding release process and maintains the sidelink connection with the second terminal.

In conclusion, with the method for processing an RRC connection according to the disclosure, the first terminal may determine whether the multipath connection is configured when receiving a handover indication sent by the second terminal, and the first terminal determines not to perform the RRC connection reestablishment in response to determining that the multipath connection is configured. With the embodiments of the disclosure, the RRC connection may be managed based on a result of determining whether the multipath connection is configured. When it is determined that the multipath connection is configured, the direct path connected to the base station may be further used to communicate with the base station, and thus there is no need to perform the RRC connection reestablishment, which may effectively avoid the interruption and signaling consumption of the remote UE caused by the RRC connection reestablishment.

In the embodiments of the disclosure, the methods according to the embodiments of the application are introduced from the perspectives of the first terminal, the second terminal, and the base station. In order to implement the functions in the methods according to the embodiments of the disclosure, the first terminal, the second terminal, and the base station may include hardware structures and software modules and implement the above functions in the form of hardware structures, software modules, or hardware structures plus software modules. One of the above functions may be executed in the form of hardware structures, software modules, or hardware structures plus software modules.

Corresponding to the methods for processing an RRC connection according to the above-mentioned embodiments, the disclosure also provides devices for processing an RRC connection. Since the devices for processing an RRC connection according to the embodiments of the disclosure correspond to the methods for processing an RRC connection according to the above-mentioned embodiments, the implementations of the methods for processing an RRC connection are also applicable to the devices for processing an RRC connection according to the embodiments of the disclosure and will not be described in detail herein.

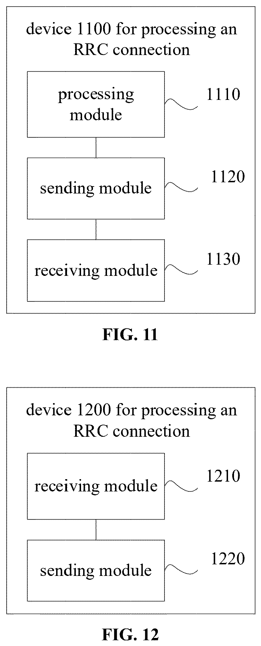

FIG. 11 is a block diagram illustrating a device 1100 for processing an RRC connection according to an embodiment of the disclosure. The device 1100 for processing an RRC connection may be applied to a first terminal.

As illustrated in FIG. 11, the device 1100 may include a processing module 1110 configured to determine whether to perform an RRC connection reestablishment in response to receiving a handover indication sent by a second terminal, in which the second terminal is a relay terminal for performing sidelink communication with the first terminal.

In some embodiments of the disclosure, the processing module 1110 may be configured to determine whether to perform the RRC connection reestablishment based on whether the first terminal is configured with a multipath connection, in which the multipath connection includes a direct path in which the first terminal is directly connected to the base station and an indirect path in which the first terminal is connected to the base station via a second terminal; and in response to determining that the first terminal is configured with the multipath connection, not performing the RRC connection reestablishment.

In some embodiments of the disclosure, the processing module 1110 may be configured to perform the RRC connection reestablishment in response to determining that the first terminal is not configured with the multipath connection.

In some embodiments of the disclosure, in response to determining that the first terminal is configured with the multipath connection, not performing, by the processing module 1110, the RRC connection reestablishing includes at least one of: in response to determining that the first terminal is configured with the multipath connection and in response to determining that a direct path in the multipath connection is available, not performing the RRC connection reestablishment; or in response to determining that the first terminal is configured with the multipath connection and in response to determining that the direct path in the multipath connection supports a transmission of an SRB, not performing the RRC connection reestablishment.

In some embodiments of the disclosure, determining that the direct path in the multipath connection is available includes at least one of: determining that no failure occurs on the direct path in the multipath connection; or determining that a transmission of the direct path in the multipath connection is not suspended.

In some embodiments of the disclosure, determining that the direct path in the multipath connection supports the transmission of the SRB includes at least one of: an RLC of the SRB being located on the direct path in the multipath connection; or the SRB being configured as a split SRB or a duplicated SRB.

In some embodiments of the disclosure, as illustrated in FIG. 11, the device 1100 further includes a sending module 1120.

The sending module 1120 may be configured to send the handover indication for the second terminal to the base station on the direct path.

In some embodiments of the disclosure, the sending module 1120 may be configured to send the handover information for the second terminal to the base station, in which the handover information includes a target cell to which the second terminal is handed over.

In some embodiments of the disclosure, the processing module 1110 may be further configured to directly release sidelink connection with the second terminal.

In some embodiments of the disclosure, the processing module 1110 may be configured to determine whether the target cell to which the second terminal is handed over belongs to a specific target cell; in response to the target cell belonging to the specific target cell, maintain the sidelink connection with the second terminal; and in response to the target cell not belonging to the specific target cell, release the sidelink connection with the second terminal.

In some embodiments of the disclosure, the processing module 1110 may be configured to match the cell identifier of the target cell with cell identifiers in the specific target list to determine whether the target cell belongs to the specific target cell.

In some embodiments of the disclosure, as illustrated in FIG. 11, the device 1100 further includes a receiving module 1130.

The receiving module 1130 may be configured to receive a specific target list sent by a base station, in which the specific target list carries a cell identifier of the specific target cell.

In some embodiments of the disclosure, the receiving module 1130 may be configured to receive indication information sent by a base station, in which the indication information is used for indicating whether to release the sidelink connection with the second terminal. The processing module 1110 may be configured to determine whether to release the sidelink connection with the second terminal based on the indication information.

FIG. 12 is a block diagram illustrating a device 1200 for processing an RRC connection according to an embodiment of the disclosure. The device 1200 for processing an RRC connection may be applied to a second terminal.

As illustrated in FIG. 12, the device 1200 may include a receiving module 1210 configured to receive a handover indication for a second terminal sent, by a first terminal via a direct path.

In some embodiments of the disclosure, the receiving module 1210 may be configured to receive handover information for the second terminal sent by the first terminal, in which the handover information includes a target cell to which the second terminal is handed over.

In some embodiments of the disclosure, as illustrated in FIG. 12, the device 1200 further includes a sending module 1220.

The sending module 1220 may be configured to send a specific target list to the first terminal, in which the specific target list carries a cell identifier of a specific target cell.

In some embodiments of the disclosure, the sending module 1220 may be configured to send indication information to the first terminal, in which the indication information is used for indicating whether to release a sidelink connection with the second terminal.

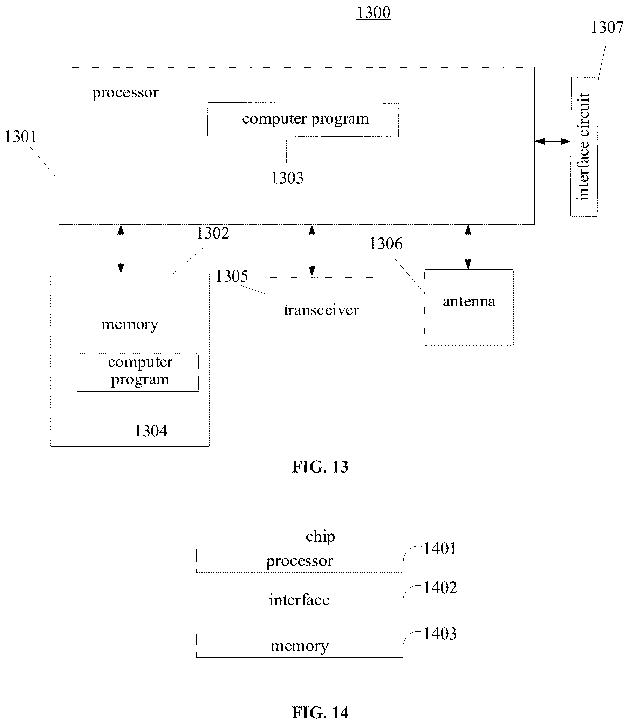

FIG. 13 is a schematic diagram illustrating the structure of a communication device 1300 according to an embodiment of the application. The communication device 1300 may be a network device, a UE, or a chip, chip system or processor that supports the network device to implement the above methods, or a chip, chip system or processor that supports the UE to implement the above methods. The device may be configured to implement the methods described in the above method embodiments, and for the details reference may be made to the description in the above method embodiments.

The communication device 1300 may include one or more processors 1301. The processor 1301 may be a general-purpose processor or a dedicated processor. For example, it may be a baseband processor or a central processing unit. The baseband processor may be configured to process communication protocols and communication data, and the central processing unit may be configured to control the communication device (such as a base station, a baseband chip, a terminal, a terminal chip, a DU or a CU), execute a computer program, and process the data of the computer program.

In some embodiments, the communication device 1300 may further include one or more memories 1302, on which a computer program 1304 may be stored. The processor 1301 executes the computer program 1304 so that the communication device 1300 performs the methods described in the above method embodiments. In some embodiments, data may also be stored in the memory 1302. The communication device 1300 and the memory 1302 may be provided separately or integrated together.

In some embodiments, the communication device 1300 may further include a transceiver 1305 and an antenna 1306. The transceiver 1305 may be referred to as a transceiver unit, a transceiver machine, or a transceiver circuit and is configured to implement a transceiver function. The transceiver 1305 may include a receiver and a transmitter. The receiver may be referred to as a receiver machine or a receiving circuit and is configured to implement a receiving function. The transmitter may be referred to as a transmitter machine or a transmitting circuit and is configured to implement a transmitting function.

In some embodiments, the communication device 1300 may further include one or more interface circuits 1307. The interface circuit 1307 is configured to receive code instructions and transmit the code instructions to the processor 1301. The processor 1301 executes the code instructions to enable the communication device 1300 to perform the methods described in the above method embodiments.

In one implementation, the processor 1301 may include a transceiver for implementing the receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be configured to read and write code/data, or the above-mentioned transceiver circuit, interface, or interface circuit may be configured to transmit or transport signals.

In one implementation, the processor 1301 may store a computer program 1303, which, when runs on the processor 1301, enables the communication device 1300 to perform the methods described in the above method embodiments. The computer program 1303 may be fixed in the processor 1301, in which case the processor 1301 may be implemented by hardware.

In one implementation, the communication device 1300 may include a circuit that may implement the functions of sending, receiving or communicating in the aforementioned method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a UE, but the scope of the communication device described in the disclosure is not limited thereto, and the structure of the communication device may not be limited by FIG. 13. The communication device may be an independent device or may be part of a larger device. For example, the communication device may be:
(1) a stand-alone integrated circuit (IC), a chip, a chip system, or a subsystem;
(2) a set of one or more ICs, which may include for example a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, an on-vehicle device, a network device, a cloud device, an artificial intelligence device, etc.; and
(6) others, and so forth.

For the case where the communication device may be a chip or a chip system, please refer to the schematic diagram of the structure of a chip illustrated in FIG. 14. The chip illustrated in FIG. 14 includes a processor 1401 and an interface 1402. The number of processors 1401 may be one or more, and the number of interfaces 1402 may be more.

In some embodiments, the chip further includes a memory 1403. The memory 1403 is configured to store necessary computer programs and data.

Those skilled in the art may also understand that the various illustrative logical blocks and steps listed in the embodiments of the disclosure may be implemented by electronic hardware, computer software, or a combination of the two. Whether such functions are implemented by hardware or software depends on the specific application and the design requirements of the entire system. Those skilled in the art may use various methods to implement the functions for each specific application, but such implementation should not be understood as exceeding the scope of protection of the embodiments of the disclosure.

The disclosure also provides a readable storage medium having instructions stored thereon, which implement the functions of any of the above method embodiments when executed by a computer.

The disclosure also provides a computer program product, which, when executed by a computer, implements the functions of any of the above-mentioned method embodiments.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general-purpose computer, a special purpose computer, a computer network, or other programmable devices. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

The disclosure provides method for processing an RRC connection, which may avoid the interruption and signaling consumption of a remote UE caused by the RRC connection reestablishment when the relay UE undergoes a radio link failure, a handover, or a cell reselection.

Based on the disclosure, an example of a specific solution is as follows.
1. When a remote UE receives a handover indication sent by a relay UE, if the remote UE is configured with a multipath connection, it is determined not to perform an RRC connection reestablishment. Otherwise, the RRC connection reestablishment is performed.
   As an embodiment, the handover indication may be indicated in a Notification Message Sidelink message.
2. Based on 1, further, if the remote UE is configured with the multipath connection and a direct path is available, it is determined not to perform the RRC connection reestablishment. Otherwise, the RRC connection reestablishment is performed.
   As an embodiment, the direct path is determined to be available in one of following cases: (i) no failure occurring on the direct path; or (ii) a transmission on the direct path transmission being not suspended.
3. Based on 1 or 2, further, if the remote UE is configured with the multipath connection and the SRB may be transmitted via the direct path, it is determined not to perform the RRC connection reestablishment.
   As an embodiment, it may be determined that the SRB may be transmitted via the direct path in one of the following cases: (i) an RLC of the SRB being located on the direct path; or (ii) the SRB being configured as split SRB or duplicated SRB.
4. Based on 1, the remote UE reports the handover indication for the relay UE via the direct path.
   As an embodiment, the handover indication for the relay UE may be reported through an RRC message.
5. Based on 4, the remote UE may also report a target cell to which the relay UE is handed over.
6. Based on 1, the remote UE releases the sidelink connection with the relay UE.
7. Based on 1, the remote UE determines that the target cell to which the relay UE is handed over belongs to a candidate cell (i.e., the specific target cell), and continues to maintain the sidelink connection with the relay UE. Otherwise, the remote UE releases the sidelink connection with the relay UE.
8. Based on 7, the remote UE obtains a candidate cell list (i.e., a specific target list), and the candidate cell list is provided by the base station.
   As an embodiment, the candidate cell list carries cell identifiers, and the cells and the serving cell of the direct path belong to the same base station.
9. Based on 4, an indication sent by the base station is received and it is determined whether to release the connection with the relay UE.

In conclusion, the disclosure has the following beneficial technical effects: based on the determination result of whether there is the multipath connection, the RRC connection may be managed. When it is determined that the multipath connection is configured, the direct path connected to the base station may be further utilized to communicate with the base station, so there is no need to perform the RRC connection reestablishment, and the interruption and signaling consumption of the remote UE caused by the RRC connection reestablishment may be effectively avoided.

A person skilled in the art may understand that the various numerical numbers such as "first" and "second" involved in the disclosure are only used for the convenience of description and are not used to limit the scope of the embodiments of the disclosure. They also indicate the order of precedence.

"At least one" in the disclosure may be described as one or more, and "a plurality of" may be two, three, four or more, which is not limited in the disclosure. In the embodiments of the disclosure, for a kind of technical features, the technical features are distinguished by "first", "second", "third", "A", "B", "C" and "D", etc., and there is no order of precedence or magnitude between the technical features described by the "first", "second", "third", "A", "B", "C" and "D".

As used herein, the terms "machine-readable medium" and "computer-readable medium" refer to any computer program product, apparatus, and/or device (e.g., disk, optical disk, memory, programmable logic device (PLD)) for providing machine instructions and/or data to a programmable processor, including a machine-readable medium that receives machine instructions as a machine-readable signal. The term "machine-readable signal" refers to any signal for providing machine instructions and/or data to a programmable processor.

The systems and techniques described herein may be implemented in a computing system that includes back-end components (e.g., as a data server), in a computing system that includes middleware components (e.g., an application server), in a computing system that includes front-end components (e.g., a user computer with a graphical user interface or a web browser through which a user may interact with implementations of the systems and techniques described herein), in or a computing system that includes any combination of such back-end components, middleware components, or front-end components. The components of the system may be interconnected by any form or medium of digital data communication (e.g., a communications network). Examples of communications networks include a local area network (LAN), a wide area network (WAN), and the Internet.

A computer system may include clients and servers. Clients and servers are generally remote from each other and usually interact through a communication network. The relationship of client and server is generated by computer programs running on respective computers and having a client-server relationship to each other.

It should be understood that the various forms of processes shown above may be used to reorder, add or delete steps. For example, the steps recorded in the disclosure may be executed in parallel, sequentially or in different orders, as long as the desired results of the technical solutions disclosed in the disclosure may be achieved, which is not limited herein.

In addition, it should be understood that the various embodiments of the disclosure may be implemented individually or in combination with other embodiments when the solution permits.

Those of ordinary skill in the art will appreciate that the units and algorithm steps of each example described in conjunction with the embodiments of the disclosure herein may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the disclosure.

Those skilled in the art may clearly understand that, for the convenience and brevity of description, for the specific working processes of the systems, devices and units described above reference may be made to the corresponding processes in the aforementioned method embodiments and will not be repeated here.

The above are only specific implementations of the disclosure, but the protection scope of the disclosure is not limited thereto. Any technician familiar with the technical field may easily think of changes or substitutions within the technical scope of the disclosure, which should be included in the protection scope of the disclosure. Therefore, the protection scope of the disclosure should be based on the protection scope of the claims.

## Claims

1. A method for processing a radio resource control (RRC) connection, performed by a first terminal, the method comprising:
in response to receiving a handover indication sent by a second terminal, determining whether to perform an RRC connection reestablishment, wherein the second terminal is a relay terminal for performing sidelink communication with the first terminal.

2. The method of claim 1, wherein determining whether to perform the RRC connection reestablishment comprises:
determining whether to perform the RRC connection reestablishment based on whether the first terminal is configured with a multipath connection, wherein the multipath connection comprises a direct path where the first terminal is directly connected to a base station and an indirect path where the first terminal is connected to the base station via the second terminal; and
in response to determining that the first terminal is configured with the multipath connection, not performing the RRC connection reestablishment.

3. The method of claim 2, wherein determining whether to perform the RRC connection reestablishment based on whether the first terminal is configured with the multipath connection comprises: in response to determining that the first terminal is not configured with the multipath connection, performing the RRC connection reestablishment.

4. The method of claim 2, wherein in response to determining that the first terminal is configured with the multipath connection, not performing the RRC connection reestablishment comprises at least one of:
in response to determining that the first terminal is configured with the multipath connection and in response to determining that the direct path in the multipath connection is available, not performing the RRC connection reestablishment; or
in response to determining that the first terminal is configured with the multipath connection and in response to determining that the direct path in the multipath connection supports a transmission of a signaling radio bearer (SRB), not performing the RRC connection reestablishment.

5. The method of claim 4, wherein determining that the direct path in the multipath connection is available comprises at least one of:
determining that no failure occurs on the direct path in the multipath connection; or
determining that a transmission on the direct path in the multipath connection is not suspended.

6. The method of claim 4, wherein determining that the direct path in the multipath connection supports the transmission of the SRB comprises at least one of:
a radio link control (RLC) of the SRB being located on the direct path in the multipath connection; or
the SRB being configured as a split SRB or a duplicated SRB.

7. The method of claim 2, further comprising:
sending, on the direct path, the handover indication to the base station.

8. The method of claim 1, further comprising:
sending handover information for the second terminal to a base station, wherein the handover information comprises a target cell to which the second terminal is handed over.

9. The method of claim 2, wherein after not performing the RRC connection reestablishment in response to determining that the first terminal is configured with the multipath connection, the method further comprises:
directly releasing a sidelink connection with the second terminal.

10. The method of claim 2, wherein after not performing the RRC connection reestablishment in response to determining that the first terminal is configured with the multipath connection, the method further comprises:
determining whether a target cell to which the second terminal is handed over belongs to a specific target cell;
in response to the target cell belonging to the specific target cell, maintaining a sidelink connection with the second terminal; and
in response to the target cell not belonging to the specific target cell, releasing the sidelink connection with the second terminal.

11. The method of claim 10, wherein determining whether the target cell to which the second terminal is handed over belongs to the specific target cell comprises:
determining whether the target cell belongs to the specific target cell by matching a cell identifier of the target cell with cell identifiers in a specific target list.

12. The method of claim 10, further comprising:
receiving the specific target list sent by the base station, wherein the specific target list carries a cell identifier of the specific target cell.

13. The method of claim 2, wherein after not performing the RRC connection reestablishment in response to determining that the first terminal is configured with the multipath connection, the method further comprises:
receiving indication information sent by the base station, wherein the indication information is used for indicating whether to release a sidelink connection with the second terminal; and
determining whether to release the sidelink connection with the second terminal based on the indication information.

14. A method for processing a radio resource control (RRC) connection, performed by a base station, the method comprising:
receiving a handover indication for a second terminal, sent by a first terminal via a direct path.

15. The method of claim 14, further comprising:
receiving handover information for the second terminal sent by the first terminal, wherein the handover information comprises a target cell to which the second terminal is handed over.

16. The method of claim 14, further comprising:
sending a specific target list to the first terminal, wherein the specific target list carries a cell identifier of a specific target cell.

17. The method of claim 14, further comprising:
sending indication information to the first terminal, wherein the indication information is used for indicating whether to release a sidelink connection with the second terminal.

18. A device for processing a radio resource control (RRC) connection, applied to a first terminal, the device comprising:
a processing module, configured to determine whether to perform an RRC connection reestablishment in response to receiving a handover indication sent by a second terminal, wherein the second terminal is a relay terminal for performing sidelink communication with the first terminal.

19. A device for processing a radio resource control (RRC) connection, applied to a base station, the device comprising:
a receiving module, configured to receive a handover indication for a second terminal, sent by a first terminal via a direct path.

20. A communication device, comprising: a transceiver, a memory and a processor, wherein the processor is connected to the transceiver and the memory respectively and is configured to control radio signal reception and transmission of the transceiver and to implement the method of any one of claims 1 to 17 by executing computer executable instructions on the memory.

21. A computer storage medium, wherein the computer storage medium has a computer executable instructions stored thereon, and after the computer executable instructions are executed by a processor, the method of any one of claims 1 to 17 is implemented.

22. A communication system, comprising a first terminal, a second terminal and a base station, wherein
the first terminal is configured to perform the method of any one of claims 1 to 13; and
the base station is configured to perform the method of any one of claims 14 to 17.
